(19) Europäisches Patentamt
European Patent Office
Office européen des brevets

(11) **EP 3 803 929 B1**

(12) **EUROPEAN PATENT SPECIFICATION**

(45) Date of publication and mention
of the grant of the patent:
**12.02.2025 Bulletin 2025/07**

(21) Application number: **19736778.2**

(22) Date of filing: **03.06.2019**

(51) International Patent Classification (IPC):
***H01H 33/59*** *(2006.01)*    ***H02H 9/02*** *(2006.01)*

(52) Cooperative Patent Classification (CPC):
**H01H 33/596; H02H 3/087;** H02H 9/021

(86) International application number:
**PCT/GB2019/051530**

(87) International publication number:
**WO 2019/234401 (12.12.2019 Gazette 2019/50)**

(54) **HIGH VOLTAGE DIRECT CURRENT (HVDC) CIRCUIT BREAKER**

HOCHSPANNUNGS-GLEICHSTROM-SCHUTZSCHALTER

DISJONCTEUR À COURANT CONTINU HAUTE TENSION (CCHT)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2018 GB 201809140**

(43) Date of publication of application:
**14.04.2021 Bulletin 2021/15**

(73) Proprietor: **University Court Of The University Of Aberdeen**
**Aberdeen AB24 3FX (GB)**

(72) Inventor: **JOVCIC, Dragan**
**Aberdeen Aberdeenshire AB10 6NQ (GB)**

(74) Representative: **Ablett, Graham Keith et al**
**Lewis Silkin LLP**
**Arbor**
**255 Blackfriars Road**
**London SE1 9AX (GB)**

(56) References cited:
EP-A1- 0 184 566     EP-A1- 2 495 745
EP-A1- 3 157 034     WO-A1-2017/037959
DE-A1- 102013 213 602     FR-A1- 2 698 736
US-A- 3 723 922

## Description

The present application relates to a high voltage direct current (HVDC) circuit breaker (DC CB).

There is considerable ongoing interest in HVDC electrical power transmission and/or distribution systems (hereinafter referred to as simply HVDC systems). Presently, most such systems only allow for point-to-point connections. Systems with more complex networks of connections have many potential advantages but require suitable HVDC circuit breakers. Some of the desired properties of such circuit breakers are:

A) High-speed operation - for example, such that the current is at least returned to a normal level in a time of <10ms, compared with ~20-60ms for typical alternating current (AC) circuit breakers. This is because HVDC networks have low impedances and so faults can quickly spread.

B) Low closed-state losses. This can be important because of the cost of such losses and the difficulty of dissipating large amounts of heat. Notably, semiconductor devices can generally operate at high speeds but have overly high closed-state losses if continuously carrying the load current.

C) Low peak fault current and low fault energy dissipation. Unlike AC fault currents, DC fault currents have no (intrinsic) zero crossings. Hence the energy associated with a DC fault current - i.e. the fault energy - may need to be dissipated in energy absorbers such as surge arresters. These can contribute substantially to the cost of the circuit breaker.

D) Low size, weight and cost. This can be particularly important because HVCD systems generally need large numbers of circuit breakers - for example, two for each HVDC cable.

There has been considerable research in relation to HVDC circuit breakers, but only a relatively small number of practical devices have been developed. See, for example, C. M. Franck "HVDC circuit breakers: A review identifying future research needs" IEEE Transactions on Power Delivery, Vol. 26, No. 2, pp. 998-1007, 2011.

For example, WO 2011/057675 A1 describes a hybrid (solid-state and mechanical) HVDC circuit breaker. It includes a series of power semiconductor switches (referred to as the main breaker) and, in parallel with the main breaker, a mechanical switch in series with at least one power semiconductor switch (referred to as the auxiliary breaker). In use, the auxiliary breaker is first opened, thereby commutating a fault current to the main breaker, then the mechanical switch is opened, and then the main breaker is opened, thereby commutating the fault current to a non-linear resistor. The mechanical switch is a disconnector, which has a high operating speed but is unable to sustain arcing and so cannot break any current and can only open at zero current. The mechanical switch bypasses the main breaker during closed-state operation. Hence the circuit breaker has a high operating speed (~2-3ms) and low closed-state losses. However, the circuit breaker has a high cost and a high peak fault current (~7-10kA in a 320kV system). Even though it only lasts for a very short time, this current may be transferred to, any may adversely affect, other parts of the HVDC system. A high peak fault current also leads to high fault energy dissipation (~10-30MJ).

US 2015/0002977 A1 describes a hybrid HVDC circuit breaker which has a similar topology to that described above, except that it uses power thyristors rather than power semiconductor switches. Hence the circuit breaker has higher current capabilities and may have a lower cost than the circuit breaker described above, but still essentially has all of the above described shortcomings.

K. Tahata et al. "HVDC circuit breakers for HVDC grid applications" Proc. IET ACDC 2015 conference, Birmingham, UK, pp.1-9, Feb. 2015 describes a fully-mechanical HVDC circuit breaker. It operates by injecting an oscillating current from a pre-charged capacitor into a DC fault current, thereby creating zero crossings. The circuit breaker has a mechanical switch corresponding to a standard AC vacuum circuit breaker with a faster driving mechanism. This switch has contacts that are capable of sustaining an arc and an arcextinguishing chamber, and this switch can break current. In all similar DC CB topologies, arcing normally lasts for 5-10ms until resonant current is injected to create zero crossing. As the circuit breaker has no semiconductor devices, it is expected to have a moderate cost. Furthermore, the closed-state losses are negligible as the load current only passes through a mechanical switch. However, compared to the above described hybrid circuit breakers, it has a much longer operating time (~8ms) and higher fault energy dissipation (~20-60MJ). Similar operating principle (arcing and a resonant circuit to interrupt the arc) is observed in W2015/10385, EP2469552, EP2494571B1, EP2495745A1, US2018/0005783A1 and others.

US9875861B2, WO2013/093066 and US2016/0300671 describe a DC CB that employs two switches in series (a mechanical interrupter and a semiconductor) and a parallel capacitor which limits voltage rise and reduces opening time. However this DCCB requires a mechanical interrupter switch to break the current. Also, an essential semiconductor switch is required which may have high ratings (ratings not specified) and may increase costs substantially.

EP 2495745 A1 discloses a circuit breaker having first and second switches in series with a current path of a high voltage DC transmission system, to be interrupted. A current rise limiter is included in series to limit the rate of current rise. A capacitor and inductance are provided in series with the first switch, which has an arc gap, so that an arc is formed in the arc gap when the first switch opens. As the current increases, oscillations occur in the current through the arc gap until such time that a zero crossing is generated so that the second switch can be activated.

WO 2017/037959 A1 discloses a fast acting switching device to suppress an occurrence of an arc.

According to the present invention there is provided a circuit breaker configured for interrupting a direct current in a current path of a high voltage DC transmission system, the circuit breaker comprising:- a first switch having a disconnecting contact; a second switch; wherein the first and second switches are operatively connected in series in the current path; a capacitor operatively connected in parallel with the first switch;

wherein- the capacitor is selected such that, when the first switch starts to open, the current in the current path experiences a series inductor-capacitor network to cause a change in the current from a direct current waveform to an alternating current waveform; and a switch opening control:- operating to start to open the first switch while the second switch is closed thereby to cause the current flowing in the current path to charge the capacitor and to experience the series inductor-capacitor network whereby the charging of the capacitor causes the current to subsequently reduce; and operating to open the second switch at a time delay after starting to open the first switch thereby to interrupt the current at a low current or a zero current in the alternating current waveform;
characterised in that the disconnecting contact of the first switch has a contact velocity sufficient so that the voltage across the capacitor is below a withstand voltage of the first switch at substantially all times;
and wherein the circuit breaker further comprises at least one further first switch in series with the first switch and both in parallel with the capacitor, wherein the switch opening control operates to start to open each first switch while the second switch is closed.

Thus, the circuit breaker has a new circuit breaker topology and seeks to achieve some or all of the above described desired properties of HVDC circuit breakers.

The circuit breaker may be configured such that the switch opening control operates the second switch to interrupt the current at or near a first zero crossing of the alternating current waveform.

The circuit breaker may further comprise an inductor in series with the first and second switches.

The first and second switches may be mechanical switches.

The first switch may be a disconnector having non-zero contact velocity at the contact separation instant.

The second switch may be an AC circuit breaker.

The circuit breaker may further comprise a varistor operatively connected in parallel with the capacitor to limit the voltage across the capacitor.

In one embodiment, the circuit breaker may further comprise one or more further modules in series with the first switch and the or each module comprising:- a further first switch, a further capacitor operatively connected in parallel with the further first switch, and a further varistor operatively connected in parallel with the further capacitor to limit the voltage across the further capacitor; wherein the switch opening control operates to start to open each first switch while the second switch is closed.

A third switch may be provided in series with the first switch and both in parallel with the capacitor; wherein the switch opening control operates to open the third switch around the instant of contact separation of the disconnecting contact of the first switch to aid commutation from the first switch to the capacitor.

The third switch may be a semiconductor-based switch.

The circuit breaker may further comprise a transformer with primary winding connected in series with the capacitor, the secondary windings connected to an auxiliary pulse generator configured to generate a pulse around the instant of contact separation of the first switch to aid commutation from the first switch to the capacitor.

The circuit breaker may further comprise a controller configured to control operation of the circuit breaker opening.

The present invention encompasses a system comprising a current path of a high voltage DC transmission system; and a circuit breaker as herein above described.

Embodiments of the present invention will now be described, by way of example only, with reference to the accompanying drawings, in which:-

Figure 1 illustrates a first example of a circuit breaker;
Figures 2A-B illustrate a fast disconnector which may be used as a first switch in the circuit breaker of Figure 1 (A: fully closed position; B: fully open position);
Figure 3 illustrates operation of the circuit breaker of Figure 1;
Figure 4A illustrates a simplified circuit including a series LC network;
Figures 4B-D show the behaviour of the circuit of Figure 4A;
Figure 5 illustrates a second example of a circuit breaker;
Figures 6A-D show simulation results for a circuit breaker corresponding to the circuit breaker of Figure 5;
Figures 7A-C show experimental results for a circuit breaker corresponding to the circuit breaker of Figure 5;
Figure 8 illustrates a third example of a circuit breaker;

Figure 9 illustrates a fourth example of a circuit breaker;
Figure 10 illustrates a fifth example of a circuit breaker;
Figure 11A illustrates a sixth example of a circuit breaker; and
Figure 11B illustrates a seventh example of a circuit breaker;
Figure 12 illustrates an eighth example of a circuit breaker.

FIRST EXAMPLE

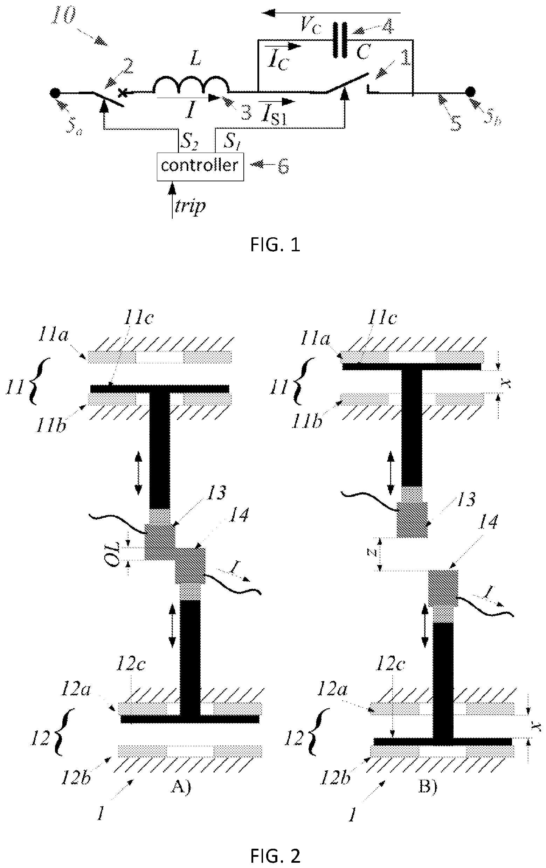

Referring to figure 1, a first example of a circuit breaker 10 which is outside the scope of the claimed invention will now be described to provide information relevant for understanding the invention. The circuit breaker 10 includes two switches 1, 2 (hereinafter referred to as first and second switches), an inductor 3, and a capacitor 4. The first and second switches 1, 2 and the inductor 3 are connected in series in a current path 5. The capacitor 4 is connected in parallel with the first switch 1. The current path 5 is between two terminals 5a, 5b (hereinafter referred to as first and second terminals). In typical use in an HVDC system, the current path 5 forms part of a larger current path (not shown) for a DC current $I$ (hereinafter referred to as the circuit current). In this example, the circuit current $I$ flows via the second switch 2, the inductor 3, and then the first switch 1. However, the first switch 1 (with the parallel capacitor 4), the second switch 2, and the inductor 3 may be connected in any order.

The first switch 1 is a mechanical switch. In this example, the first switch 1 is a disconnector and, more specifically, a fast disconnector. Fast disconnectors are generally preferred to other types of switches as they have a relatively high operating speed and a relatively low cost. However, while being fast (e.g. an opening time of ~2ms) enables the size, weight and costs of other parts of the circuit breaker 10 to be reduced, this is not essential and the first switch 1 may be a simple disconnector. It is an important property of this invention that arcing is practically non-existent, therefore a disconnector will suffice, which sets this invention apart from most other mechanical DC CBs which have an arcing period. Arcing may occur only as a consequence of parasitic inductances, and in such case it is for an extremely short period which may last several micro-seconds and is practically unmeasurable.

Referring to figures 2A and B, a fast disconnector 1 which may be used as the first switch 1 will now be described. The fast disconnector 1 includes two Thomson coil actuators 11, 12. Each actuator 11, 12 includes two coils 11a, 11b, 12a, 12b and an actuator disc 11c, 12c. Each actuator disc 11c, 12c is mechanically connected to a contact 13, 14. When the fast disconnector 1 is fully closed (see figure 2A), the contacts 13, 14 overlap by a distance $OL$

A very large force on the actuator disks 11c, 12c can be generated by applying a current pulse to the appropriate coils (11b, 12b when opening). As the contacts move from standstill, they accelerate (increase speed) while still conducting current. The contacts 13, 14 separate after the actuator discs 11c, 12c have moved a distance $x = OL/2$. Hence the contacts 13, 14 can be separated at non-zero velocity. After the contacts 13, 14 have separated (see e.g. figure 2B), the distance between the contacts 13, 14 is $z = 2x - OL$.

As will be appreciated, there are many different types of switches with different driving mechanisms, insulating media, contacts, etc. which can instead be used as the first switch 1.

Referring again to figure 1, the second switch 2 is also a mechanical switch. The second switch 2 may be any suitable type of mechanical switch since it experiences current which naturally passes through zero. The second switch 2 is preferably a standard AC circuit breaker or a switch that functions in a similar way - i.e. a switch that is able to sustain and then extinguish an arc. The second switch 2 also preferably has a relatively high operating speed as this will help increase the overall operating speed of the circuit breaker 10.

The inductor 3 has a particular inductance $L$ and the capacitor 3 has a particular capacitance $C$. As will be explained below, the values of $L$ and $C$ can be selected based on several criteria.

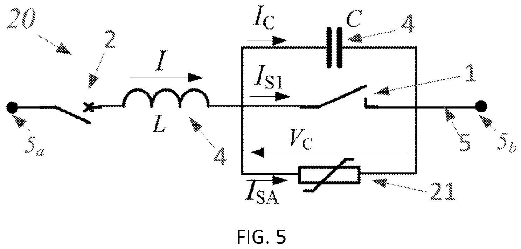

The circuit breaker 10 also includes a controller 6. The controller 6 is operatively connected to each switch 1, 2 to provide control signals thereto. The controller 6 is also preferably operatively connected to a trip unit (not shown) to receive signals therefrom. For simplicity, the controller 6 is omitted from figures 5, 8, 9, 10, 11A and 11B.

The circuit breaker 10 can have a relatively low cost because it has only two mechanical switches (1, 2) and two passive components (3, 4) and, in particular, has no energy absorbers. The capacitor 4 is likely to be the most costly component. However, as will become apparent, the circuit breaker 10 can function with a reasonable value of capacitance $C$ and hence a reasonably-low-cost capacitor 4.

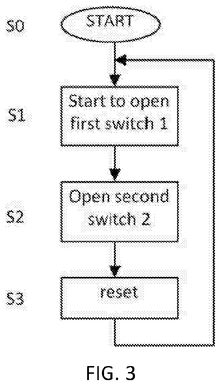

Referring to figure 3, operation of the circuit breaker 10 will now be described. Initially (at S0), the first and second switches 1, 2 are both closed and the circuit breaker 10 is conducting a circuit current $I$. At this time, the circuit current $I$ corresponds to a normal load current. The closed-state losses are negligible as the circuit current $I$ passes through two mechanical switches (1, 2) and an inductor (3). The capacitor 4 is discharged as it is shorted by the first switch 1. At a first step S1, the controller 6 receives a trip signal from the trip unit and (immediately) provides a control signal to the first switch 1 which causes the first switch 1 to start to open. The trip signal may have been provided by the trip unit in response to the trip unit detecting a fault condition - for example, that the circuit current $I$ is unduly high and corresponds to a fault current.

Resonant circuit after C is inserted

When the first switch 1 is at least partly open, the circuit current *I* (i.e. fault current) experiences a resonant network - in particular, a series LC network. The series LC network is made up (at least primarily) of the inductor 3 and the capacitor 4. The series LC network causes the circuit current *I* to change from a DC current to an AC current. This will now be explained in more detail with reference to a simplified circuit 100.

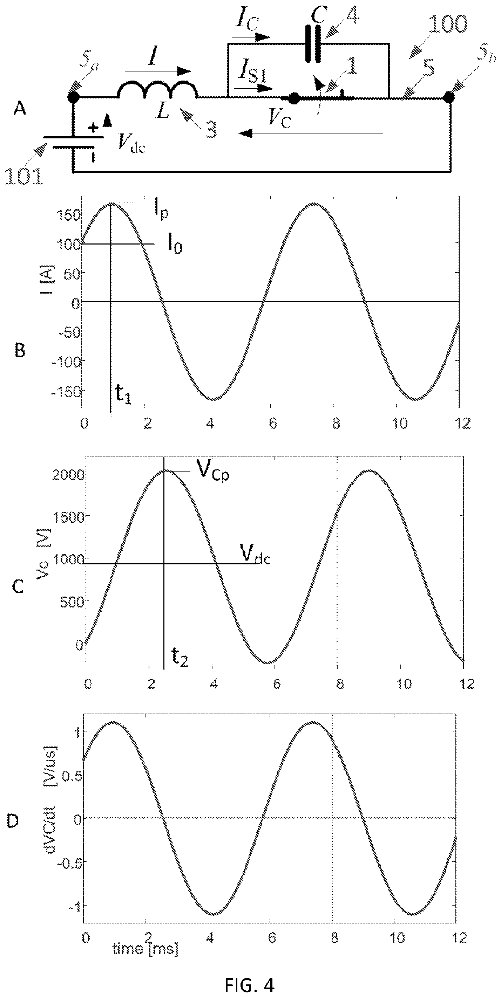

Referring to figure 4A, the circuit 100 includes the same elements as the circuit breaker 10 except that it does not include the second switch 2. Also, the circuit 100 includes a power supply 101 across the first and second terminals 5a, 5b, which supplies a (constant) DC voltage $V_{DC}$.

It is assumed that, initially, the first switch 1 is closed and there is a DC current $I_0$ (hereinafter referred to as the initial current) flowing around the circuit. At $t = 0$, the first switch 1 is opened, thereby producing a series LC circuit. The current flowing around the circuit *I* (hereinafter referred to as the circuit current) is given by:

$$I(t) = I_0 \cos \omega_0 t + \frac{V_{DC}}{z_0} \sin \omega_0 t \qquad \text{(equation 1)}$$

$$\omega_0 = 1/\sqrt{LC} \qquad \text{(equation 2a)}$$

$$z_0 = \sqrt{L/C} \qquad \text{(equation 2b)}$$

The voltage across the capacitor (hereinafter referred to as the capacitor voltage) is given by:

$$V_C(t) = V_{DC} - V_{DC} \cos \omega_0 t + z_0 I_0 \sin \omega_0 t \qquad \text{(equation 3)}$$

The time derivative of the capacitor voltage is given by:

$$\frac{dV_C(t)}{dt} = \omega_0 V_{DC} \sin \omega_0 t + \omega_0 z_0 I_0 \cos \omega_0 t \qquad \text{(equation 4)}$$

Figures 4B-D show the circuit current *I,* the capacitor voltage *Vc* and the time derivative of the capacitor voltage $\frac{dV_C}{dt}$ calculated using equations 1-4 for a DC voltage $V_{DC}$ of 900V, an initial current $I_0$ of 100A, an inductance *L* of 7mH, and a capacitance *C* of 150μF. It can be seen that, after the first switch 1 is opened at $t = 0$, the circuit current *I* rises from its initial value $I_0$ and reaches a peak $I_P$ (hereinafter referred to as the peak fault current) at $t = t_1$. Furthermore, the capacitor voltage $V_C$ rises from zero and reaches a peak $V_{CP}$ (hereinafter referred to as the peak capacitor voltage) at $t = t_2$.

When the first switch 1 is at least partly open, the circuit current *I* is an AC current with a mean value of zero - i.e. no DC component. Hence the circuit current *I* will have zero crossings for any value of DC voltage $V_{DC}$ and any value of initial current $I_0$ (including a low value of initial current and even zero initial current). The peak fault current $I_P$, the peak capacitor voltage $V_{CP}$, the initial rate of rise of the capacitor voltage, and the timing of the zero crossings depend, amongst other things, on the values of *L* and *C*.

An HVDC system including the circuit breaker 10 will behave similarly to the above described circuit 100. In this case, the above described DC voltage $V_{DC}$ corresponds to the voltage of the HVDC system, and the above described initial current $I_0$ corresponds to the circuit current *I* when the first switch 1 starts to open (i.e. its contacts separate). Since the circuit breaker 10 preferably has relatively large values of *L* and *C*, the influence of any inductance or capacitance in the HVDC system will be relatively small. Hence the behaviour of the circuit breaker 10 can be predicted sufficiently reliably using expressions such as those given above.

This can help in selecting a suitable set of properties of the circuit breaker 10 - for example, suitable values of *L* and *C* and suitable properties of the first switch 1. For example, the values of *L* and *C* can be selected to determine the initial rate of rise of the capacitor voltage $V_C$. A higher rate can help the HVDC system voltage to recover from a fault, but the rate cannot be too high, as will be explained below.

Arcless contact separation and opening

The properties of the circuit breaker 10 are selected such that, when the first switch 1 is partly or fully open, the capacitor voltage *Vc* remains below a withstand voltage of the first switch 1 - i.e. a maximum voltage $V_M$ that the first switch 1 is able to withstand without arcing and/or failure. $V_M$ may also be called a switch recovery voltage. The withstand voltage $V_M$ of the first switch 1 depends on the distance $z$ between its contacts (e.g. the contacts 13, 14) and the dielectric strength $d$ of the medium between the contacts. In particular, the following linear relationship can be assumed:

$$V_M(t) = z(t)d \qquad \text{(equation 5)}$$

By way of example, the dielectric strength of air is ~3kVmm$^{-1}$ and the dielectric strength of SF$_6$ gas is ~7.5kVmm$^{-1}$. For the capacitor voltage $V_C$ to remain below the withstand voltage $V_M$ of the first switch 1, the following condition should be satisfied:

$$z(t)d > V_C(t), \; t > 0 \qquad \text{(equation 6)}$$

where $t$ is time and is measured relative to the point at which the first switch 1 starts to open (hereinafter referred to as the point of contact separation). If equation (6) is satisfied there will be no arcing across S1 contacts.

Depending on the properties of the first switch 1 and circuit breaker 10 generally, the following further condition (obtained by differentiating equation 6 with respect to time) which involves contact velocity $v=dz(t)/dt$, may also need to be satisfied:

$$\frac{dz(t)}{dt}d > \frac{dV_C(t)}{dt} \qquad \text{(equation 7)}$$

Typically, the contacts of the first switch 1 will move with a substantially constant relative velocity $v=dz(t)/dt$ during opening. A suitable such velocity $v$ can be relatively easily selected using the above described predicted behaviour of the capacitor voltage $V_C$ (see e.g. figures 4C-D) and the above described conditions (see e.g. equations 6 and 7).

Equation (6) should be satisfied at all times including the instant of contact separation. This can be achieved if the contacts of switch S1 have non-zero velocity at the instant of separation, This conclusion is deduced from equation (7) since voltage derivative is non-zero. This condition can be achieved for example if S1 has a construction with lateral overlapping contacts (OL in figure 2). This enables contacts to accelerate while sliding (and conducting current) and to achieve some non-zero velocity at the separation instant. When contact velocity is adequate according to equation (7) current is commutated to capacitor and there is no need for current interruption. This sets the invention apart from most prior art. In the prior art, it is required to interrupt current which is achieved with an arcing mechanical interrupter in WO2015/10385, EP2469552, EP2494571B, EP2495745, US2018/0005783A, WO2013/093066 or semiconductor switch in WO2011/057675A and others.

Moreover, the capacitor voltage $V_C$ may reach its peak value $V_{CP}$ after the first switch 1 has fully opened. Hence the first switch 1 should also be selected such that the maximum distance $z_M$ between its contacts satisfies $z_M d > V_{CP}$ (cf. equation 6).

Moreover, it can be seen from figure 4C that capacitor voltage $Vc$ initially rises from zero to its peak value in a time of approximately ⅓-½ of the period of the LC oscillations (this period is $1/f_0$).

The first switch 1 preferably has an opening time (i.e. the time taken for the distance $z$ between its contacts to go from 0 to $z_M$) that is the same as or similar to this time, i.e. also ~⅓-½ of the period of the LC oscillations.

The above described considerations can help in selecting suitable values of $L$ and $C$ and suitable properties of the first switch 1, e.g. voltage rating and opening speed.

Hence the circuit breaker 10 is configured such that the first switch 1 opens without arcing. This is preferred as it results in faster operation and without wearing of the contacts. However because of parasitic inductances not considered above, a short arcing may occur at the instant of separation. This arcing would be extremely short in the range of few microseconds and practically unobservable. Therefore it can be considered that switch S1 sustains no arcing and does not break any current.

Referring again to figure 3, at a second step S2, the controller 6 provides a control signal to the second switch 2 which causes the second switch 2 to open. The second step S2 is carried out when a particular period of time (hereinafter referred to as the time delay) has elapsed after the first step S1.

As explained above, at this time, the circuit current $I$ (i.e. fault current) is an AC current with multiple zero crossings. This enables the second switch 2 to interrupt the circuit current $I$ in the same or a similar way to an AC circuit breaker - in particular, to form an arc when the contacts of the second switch 2 separate, to sustain the arc, and then to extinguish the arc at or near a zero crossing of the circuit current $I$. Thus, the circuit current $I$ is interrupted. As will be appreciated, the second switch 2 may be able to interrupt the circuit current $I$ when it is a relatively low, non-zero value (e.g. up to ~100 A or more), i.e. merely near to a zero crossing.

Preferably, the time delay between the first and second steps S1, S2 is such that the second switch 2 (which has a known opening time) fully opens just before a zero crossing of the circuit current $I$. Hence the arcing time in S2 can be minimised. Preferably, the opening will occur at the first zero crossing (i.e. $t = t_2$ in figure 4c) when the capacitor voltage $V_C$ is at its peak and circuit current $I$ passes through zero for the first time. Interrupting the circuit current $I$ at a zero crossing can be carried out with substantially zero energy dissipation. Hence the circuit breaker 10 can avoid the issue associated with typical HVDC circuit breakers of requiring large energy absorbers (and other components) due to the circuit current $I$ having a high value when it is interrupted.

At a third step S3 (which may be omitted), the controller 6 resets the circuit breaker 10 by providing control signals to the first and second switches 1, 2 which cause the first and second switches 1, 2 to close. The third step S3 may be carried out in response to any suitable event - e.g. the controller 6 receiving a reset (or an operator close command) signal.

In some examples, the first switch 1 is closed before the second switch 2. In this case, since the first and second steps S1, S2 leave the capacitor 4 in a charged state, action should be taken to avoid closing the first switch 1 across the charged capacitor 4. For example, the capacitor 4 can be discharged via a resistor (not shown), which may be connected to the capacitor 4 either directly or via a controllable switch (not shown). Once the first switch 1 has been closed, the second switch 2 can simply be closed - for example, regardless of any circuit current $I$.

In other examples, the second switch 2 is closed before the first switch 1. In this case, after the second switch 2 has been closed, the circuit current $I$ experiences the above described series LC network and so, amongst other things, the capacitor voltage $V_C$ oscillates (see e.g. figure 4C). The first switch 1 is then closed during a period of time during which the capacitor voltage $V_C$ is relatively low. The timing of this can be based, for example the above described predicted behaviour of the capacitor voltage $V_C$.

The above described steps S1, S2, S3 may then be repeated.

SECOND EXAMPLE

Referring to figure 5, a second example of a circuit breaker 20 which is outside the scope of the claimed invention will now be described. The circuit breaker 20 is the same as the first example of the circuit breaker 10 except that it has an energy absorber - in particular, a surge arrester 21 - connected in parallel with the capacitor 4. In other examples, the circuit breaker 20 may include a different type of (and/or a differently connected) energy absorber.

The circuit breaker 20 operates in the same way as the first example of the circuit breaker 10, except that the surge arrester 21 limits the capacitor voltage $V_C$ to a particular value (hereinafter referred to as the capacitor voltage limit). Thus, the capacitor voltage $V_C$ can be limited to a value of, for example, ~1.5pu (i.e. 1.5 × the DC voltage). Such a limit is used, for example, in WO 2011/057675 A1. This is lower than the peak capacitor voltage $V_{CP}$ of ~2-3pu in the first example of the circuit breaker 10. The lowest capacitor voltage limit that enables the circuit breaker 20 to interrupt the circuit current $I$ is just above 1pu.

The time to the first current zero crossing will be somewhat longer in the circuit breaker 20 than in the first example of the circuit breaker 10 - i.e. the first current zero crossing will occur at $t > t_2$ (see figure 4). The time delay between the opening of the first and second switches 1, 2 should account for this if it intended for the second switch 2 to fully open just before the first zero crossing of the circuit current $I$ (to minimise arcing time). The cost of the circuit breaker 20 may be lower than that of the first example of the circuit breaker 10 - depending on the increased costs due to the surge arrester 21 versus the reduced costs due to the lower capacitor voltage rating, etc.

Simulation results

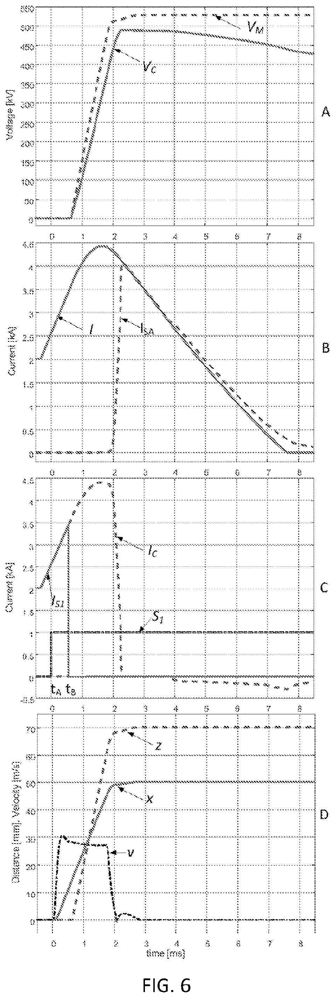

Figures 6A-D shows simulation results for a circuit breaker corresponding to the second example of the circuit breaker 20. The simulation was carried out with the following parameters:

- DC voltage $V_{DC}$ = 320kV
- load current $I$ = 2kA
- inductance $L$ = 200mH
- capacitance C = 13μF
- opening time of the first switch 1: 2ms
- capacitor (and surge arrester) voltage limit: 480kV (1.5pu)
- opening time of the second switch 2: 8ms

Figure 6A shows (i) the capacitor voltage $V_C$ and (ii) the withstand voltage $V_M$ of the first switch 1. It can be seen that $V_M > V_C$. Figure 6B shows (i) the circuit current $I$ and (ii) the current $I_{SA}$ in the surge arrester 21.

The circuit current $I$ starts at 2kA and then begins to rise. The circuit current $I$ is 2.6kA at $t = t_A$, when a trip signal is received and the contacts of the first switch 1 start to move, and is 3.4kA at $t = t_B$, which is the point of contact separation. The circuit current $I$ then reaches a peak value of 4.4kA before falling to zero. The peak fault current of 4.4kA is considerably lower than, for example, the above described known hybrid HVDC circuit breakers (see e.g. WO 2011/057675 A1), and so any adverse effect on other parts of the HVDC system should be reduced. Put simply, the circuit breaker 20 is able to quickly reduce the circuit current $I$ because the capacitor 4 is introduced into the current path 5 almost immediately after the trip signal is received.

Figure 6C shows (i) the current $I_{S1}$ in the first switch 1, (ii) the current $I_C$ in the capacitor 4, and (iii) the control signal $S_1$ sent by the controller 6 to the first switch 1. It can be seen that there is successful current commutation to the capacitor 4. Figure 6D shows (I) the displacement $x$ of each of the contacts of the first switch 1 (e.g. the contacts 13, 14), (ii) the distance $z$ between the contacts, and (iii) the relative velocity v of the contacts. It can be seen that there is a sufficiently high relative velocity, resulting in arc-less commutation at $t = t_B$.

Experimental results

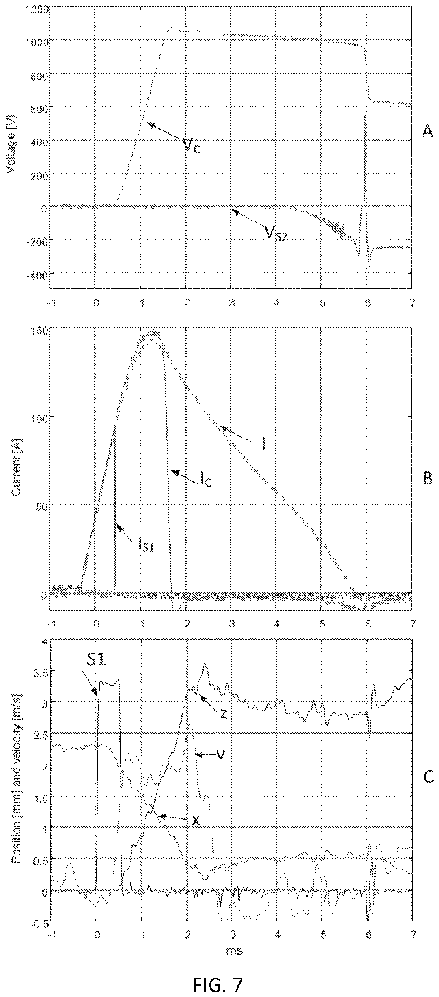

Figures 7A-D show experimental results for a (scaled-down) prototype circuit breaker corresponding to the second example of the circuit breaker 20. In this case, the parameters are:

- DC voltage $V_{DC}$ = 900V
- inductance $L$ = 7mH
- capacitance C = 150$\mu$F
- opening time of the first switch 1: 2ms
- capacitor (and surge arrester) voltage limit: 1100V (1.22pu)
- opening time of the second switch 2: 4.5ms

Figure 7A shows (i) the capacitor voltage $V_C$ and (ii) the voltage $V_{S2}$ across the second switch 2. It can be seen that capacitor voltage $V_C$ rises to ~1100V, showing that the first switch 1 has opened and that the circuit current $I$ has been commutated to the capacitor 4. Since voltage rise is fast, there is no arcing. The behaviour of the voltage $V_{S2}$ across the second switch 2 shows that the circuit current $I$ is interrupted by the second switch 2.

Figure 7B shows (i) the circuit current $I$, (ii) the current $I_{S1}$ in the first switch 1, and (iii) the current $I_C$ in the capacitor 4. The circuit current $I$ starts at ~5A and then begins to rise. The circuit current $I$ is ~40A when a trip signal is received and the contacts of the first switch 1 start to move, and is ~ 90A at the point of contact separation. It can be seen that the current $I_{S1}$ in the first switch 1 drops abruptly to zero at the point of contact separation, showing that the circuit current $I$ of ~90A is successfully commutated to the capacitor 4. The (total) circuit current $I$ reaches a peak value of 150A before falling to zero ~6ms after the trip signal is received. This confirms that the circuit current $I$ can be interrupted by a simple AC circuit breaker (i.e. the second switch 2).

Figure 7C shows (i) the control signal $S_1$ sent by the controller 6 to the first switch 1, (ii) the displacement $x$ of each of the contacts of the first switch 1, (iii) the distance $z$ between the contacts, and (iv) the relative velocity v of the contacts. It is seen that the contact separation occurs at around 0.5ms.

Third example

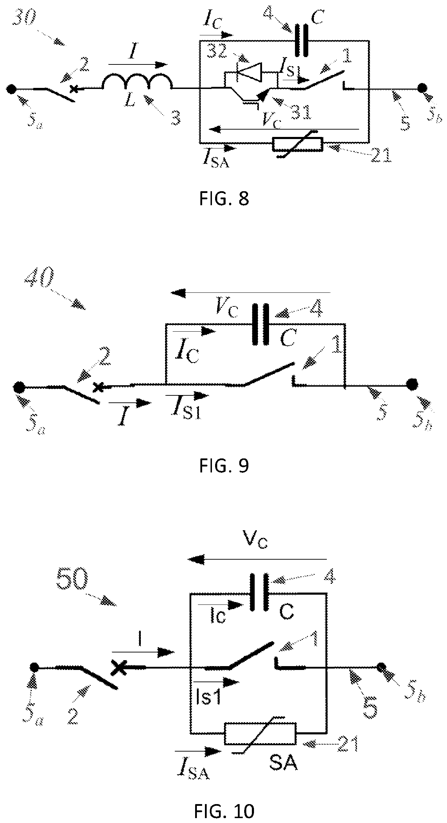

Referring to figure 8, a third example of a circuit breaker 30 which is outside the scope of the claimed invention will now be described. The circuit breaker 30 is the same as the second example of the circuit breaker 20 except that it has a switch 31 (hereinafter referred to as a third switch) connected in series with the first switch 1 such that the first and third switches 1, 31 are parallel with the capacitor 4. Furthermore, the controller (not shown) is also operatively connected to the third switch 31 to provide control signals thereto. The third switch 31 is preferably a semiconductor-based switch such as an insulated-gate bipolar transistor (IGBT) or a metal-oxide-semiconductor field-effect transistor (MOSFET). A diode 32 is connected anti-parallel across the third switch 31.

Due to parasitic inductances in the connecting cables, there may be a delay before the current $I_C$ to the capacitor 4 rises, and during this period a voltage may occur across the contacts of the first switch 1 which may cause arcing. As explained above, the conditions for arcless separation can be especially critical at this point.

The third switch 31 is to help the first switch 1 commute the circuit current $I$ to the capacitor 4. In particular, the third switch 31 is opened for a period of time starting at or near the instant of contact separation of the first switch 1, thereby removing current from the separating contacts of the first switch 1 (e.g. the contacts 13, 14). Hence the third switch 31 enables the first switch 1 to more effectively and/or more safely commute the circuit current $I$ to the capacitor 4 by enabling the current $I_C$ to the capacitor 4 to stabilise. Hence the third switch 31 provides additional voltage blocking capability. The third switch is required only to overcome any parasitic inductance in the circuit, and it is rated for very low voltage which differentiates this design from US9875861B2.

The voltage rating - and hence the cost - of the third switch 31 can be relatively low. By way of example, for a typical 320kV HVDC system (see the example described above with references to figures 6A-D), a small, 10kV-rated third switch 31 would stop the circuit current $I$ for ~40$\mu$s - i.e. it takes the capacitor voltage $V_C$ ~40$\mu$s to rise to 10kV.

The circuit breaker 30 operates in the same way as the second example of the circuit breaker 20, except that the controller (not shown) provides a control signal to the third switch 31 which causes the third switch 31 to open for a period of time as described above. The timing of this can be based, for example, on the above described predicted behaviour of the capacitor voltage $Vc$.

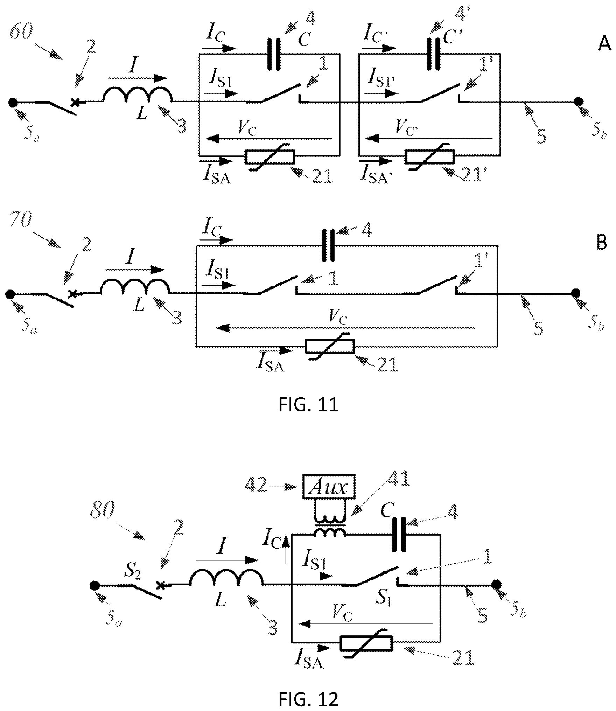

Alternatively, instead of using the third switch, various other methods can be employed to help current commutate to the capacitor branch at the instant of contact separation. One attractive method is to inject a current pulse from an auxiliary source which is coupled through a small transformer with the capacitor branch as shown in figure 12. The transformer provides isolation of the low-voltage auxiliary unit which may be less costly than third switch. The pulse from the auxiliary unit is very short (below 100$\mu$s) of limited current magnitude and achieves the same effect as the third switch. This commutating aid is only required if parasitic inductance is present, and therefore it has low rating.

Fourth and fifth examples

The inductor 3 in the first example of the circuit breaker 10 limits the initial rate of rise of the circuit current $I$ and also produces the series LC circuit which defines the initial rate of rise of the capacitor voltage $V_C$ and changes the circuit current $I$ from a DC current to an AC current. Nevertheless, the inductor 3 need not be included. This is because the HVDC system may include one or more components that have some or all of these effects.

Accordingly, referring to figure 9, a fourth example of a circuit breaker 40 outside the scope of the claimed invention is the same as the first example of the circuit breaker 10 except that it does not include an inductor. In this example, the circuit breaker 40 is suitable for use in an HVDC system including one or more components (e.g. transformers or cables) with internal inductances which perform a similar function to the inductor 3 in the first example of the circuit breaker 10. For lower-voltage applications, the voltage tolerances need not be very strict and so a ~3-4pu voltage need not be of special concern and the circuit breaker 40 may operate with a relatively small inductance in the series LC network.

Referring to figure 10, a fifth example of a circuit breaker 50 outside the scope of the claimed invention is the same as the second example of the circuit breaker 20 except that it does not include an inductor. Accordingly, the circuit breaker 50 corresponds to the fourth example of the circuit breaker 40 with a surge arrester 21.

In this example, the circuit breaker 50 is suitable for use in an HVDC system which does not include components with (significant) internal inductances as described above, but which includes components (e.g. a converter) that limit the magnitude of the circuit current $I$. Such components can have the effect of limiting the initial rate of rise of the capacitor voltage $Vc$. In such a case, the capacitor voltage $V_C$ will rise until it reaches the limit set by the surge arrester 21 and the circuit current $I$ will then reduce to low values. Since there is no series LC circuit, there will be no intrinsic zero crossings of the circuit current $I$. However, such zero crossings are not essential if the circuit current $I$ reduces to sufficiently low values for interruption by the second switch 2. The circuit breaker 50 may be particularly suitable in relatively-low-power circuits where a low-cost second switch 2 can readily interrupt non-zero currents.

Sixth and seventh examples

In very high voltage applications, the requirements for a short opening time of the first switch 1 and a large maximum distance $z_M$ between the contacts of the first switch 1 can be high. These requirements can be met by using multiple first switches 1 connected in series and operated simultaneously. By way of example, if a blocking voltage of 450kV is required, this corresponds to $z_M = 60$mm (60mm $\times$ 7.5kV = 450kV) for a single first switch 1, which may be difficult to achieve in an opening time of 2ms. However, it can be achieved with reasonable accelerations and mechanical forces using six first switches 1 connected in series, each providing 10mm of contact separation and opening in 2ms.

Accordingly, referring to figure 11A, a sixth example of a circuit breaker 60 which is outside the scope of the claimed invention is the same as the second example of the circuit breaker 20 except that it includes a further first switch 1' connected in series with the first and second switches 1 and also includes a further capacitor 4' connected in parallel with the further first switch 1' and a further surge arrester 21' connected in parallel with the further capacitor 4'. In other, similar examples, there may be a series of more than two 'modules', each of which includes a first switch, a capacitor and a surge arrester.

Referring to figure 11B, a seventh example of a circuit breaker 70 is the same as the second example of the circuit breaker 20 except that it includes a further first switch 1' connected in series with the first and second switches 1, and in parallel with the capacitor 4 and the surge arrester 21. In other, similar examples, there may be a series of more than two first switches.

Eighth example

As mentioned in the third example, parasitics in the circuit may invalidate conditions for the arc-less contact separation. Instead of using the third switch, various other methods can be employed to help current commutate to the capacitor branch at the instant of contact separation. One attractive method, which is outside the scope of the claimed invention, is to inject a current pulse from an auxiliary source 42 which is coupled through a small transformer 41 with the capacitor branch as shown in figure 12. The transformer provides isolation of the low-voltage auxiliary unit which may be less costly than third switch. The pulse from the auxiliary unit is very short (below 100$\mu$s) of limited current magnitude and achieves the same effect as the third switch. This commutating aid is only required if parasitic inductance is present, and therefore it has low rating.

Other variations

It will be appreciated that there may be many other variations of the above described embodiments. For example, each circuit breaker may be used in other types of DC networks or in AC networks. Amongst other things, this is because each circuit breaker can produce an AC circuit current $I$ (with zero crossings) regardless of the values of $V_{DC}$ and $I_0$.

Instead of producing the above described series LC network, each circuit breaker may produce another type of resonant network, such as a higher-order LC network.

Where suitable, any of the circuit breakers 10-70 may have one or more of the features of the other circuit breakers 10-70.

**Claims**

1.  Circuit breaker (10, 20, 30, 40, 50) configured for interrupting a direct current in a current path (5) of a high voltage DC transmission system, the circuit breaker comprising:-

    a first switch (1) having a disconnecting contact;
    a second switch (2);
    wherein the first and second switches (1,2) are operatively connected in series in the current path;
    a capacitor (4) operatively connected in parallel with the first switch (1);
    wherein:-

    the capacitor (4) is selected such that, when the first switch (1) starts to open, the current in the current path (5) experiences a series inductor-capacitor network to cause a change in the current from a direct current waveform to an alternating current waveform; and
    a switch opening control (6):-

    operating to start to open the first switch (1) while the second switch (2) is closed thereby to cause the current flowing in the current path (5) to charge the capacitor (4) and to experience the series inductor-capacitor network hereby the charging of the capacitor causes the current to subsequently reduce; and
    operating to open the second switch (2) at a time delay after starting to open the first switch (1) thereby to interrupt the current at a low current or a zero current in the alternating current waveform;

    **characterised in that** the disconnecting contact of the first switch (1) has a contact velocity sufficient so that the voltage across the capacitor (4) is below a withstand voltage of the first switch (1) at substantially all times, and wherein the circuit breaker further comprises;
    at least one further first switch (1') in series with the first switch (1) and both in parallel with the capacitor (4);
    wherein the switch opening control (6) operates to start to open each first switch (1, 1') while the second switch (2) is closed.

2.  Circuit breaker according to claim 1 wherein switch opening control operates the second switch (2) to interrupt the current at or near a first zero crossing of the alternating current waveform.

3.  Circuit breaker according to claim 1 or 2 wherein the first switch (1) comprises a disconnector having non-zero contact velocity at the contact separation instant.

4.  Circuit breaker according to any preceding claim further comprising a varistor (21) operatively connected in parallel with the capacitor (4) to limit the voltage across the capacitor (4).

5.  Circuit breaker according to any preceding claim further comprising:

a third switch (31) in series with the first switch (1) and both in parallel with the capacitor (4);
wherein the switch opening control (6) operates to open the third switch (31) around the instant of contact separation of the disconnecting contact of the first switch (1) to aid commutation from the first switch to the capacitor.

6. Circuit breaker according to any preceding claim further comprising:-

    a transformer with primary winding connected in series with the capacitor;
    the secondary winding connected to an auxiliary pulse generator configured to generate a pulse around the instant of contact separation of the first switch to aid commutation from the first switch to the capacitor.

7. Circuit breaker according to any preceding claim further comprising a controller configured to control operation of the circuit breaker opening.

8. Circuit breaker according to any preceding claim further comprising an inductor in series with the first and second switches.

9. A system comprising:

    a current path (5) of a high voltage DC transmission system; and
    a circuit breaker (10, 20, 30, 40, 50) according to any preceding claim provided in the current path.

**Patentansprüche**

1. Leistungsschutzschalter (10, 20, 30, 40, 50), konfiguriert, um einen Gleichstrom in einem Strompfad (5) eines Hochspannungs-Gleichstrom-Übertragungssystems zu unterbrechen, der Leistungsschutzschalter umfassend:-

    Eine ersten Schalter (1) mit einem Ausschaltkontakt;
    einen zweiten Schalter (2);
    wobei der erste und der zweite Schalter (1,2) betriebsfähig in Reihenschaltung in dem Strompfad verbunden sind;
    einen Kondensator (4), der betriebsfähig in Parallelschaltung mit dem ersten Schalter (1) verbunden ist; wobei:-

    Der Kondensator (4) so ausgewählt ist, dass, wenn sich der erste Schalter (1) zu öffnen beginnt, der Strom in dem Strompfad (5) in ein Spulen-Kondensator-Reihennetzwerk übergeht, um eine Änderung im Strom von einer Gleichstrom-Wellenform zu einer Wechselstrom-Wellenform auszulösen; und
    eine Schalter-Öffnungssteuerung (6):-

        die den ersten Schalter (1) zu öffnen beginnt, während der zweite Schalter (2) geschlossen ist, wodurch veranlasst wird, dass der Strom in dem Strompfad (5) fließt, um den Kondensator (4) zu laden und in das Spulen-Kondensator-Reihennetzwerk überzugehen, wodurch der Strom durch das Laden des Kondensators in der Folge reduziert wird; und
        die den zweiten Schalter (2) in einer Zeitverzögerung nach Beginn des Öffnens des ersten Schalters (1) öffnet und dadurch den Strom bei schwachem Strom oder einem Nullstrom in der Wechselstrom-Wellenform unterbricht;

        **dadurch gekennzeichnet, dass** der Ausschaltkontakt des ersten Schalters (1) eine Kontaktgeschwindigkeit hat, die ausreichend ist, dass die Spannung im gesamten Kondensator (4) im Wesentlichen zu jeder Zeit unterhalb einer Stehspannung des ersten Schalters (1) liegt, und wobei der Leistungsschutzschalter ferner umfasst;
        mindestens einen weiteren ersten Schalter (1') in Reihenschaltung mit dem ersten Schalter (1) und beide in Parallelschaltung mit dem Kondensator (4);
        wobei die Schalter-Öffnungssteuerung (6) jeden ersten Schalter (1, 1') zu öffnen beginnt, während der zweite Schalter (2) geschlossen ist.

2. Leistungsschutzschalter nach Anspruch 1, wobei die Schalter-Öffnungssteuerung den zweiten Schalter (2) betätigt, um den Strom an oder in der Nähe eines ersten Nulldurchgangs der Wechselstrom-Wellenform zu unterbrechen.

3. Leistungsschutzschalter nach Anspruch 1 oder 2, wobei der erste Schalter (1) einen Lasttrenner mit Kontaktgeschwindigkeit ungleich Null im Moment der Kontakttrennung umfasst.

4. Leistungsschutzschalter nach einem der vorstehenden Ansprüche, ferner umfassend einen Varistor (21), der betriebsfähig in einer Parallelschaltung mit dem Kondensator (4) verbunden ist, um die Spannung über den gesamten Kondensator (4) zu begrenzen.

5. Leistungsschutzschalter nach einem der vorstehenden Ansprüche, ferner umfassend:

   Einen dritten Schalter (31) in Reihenschaltung mit dem ersten Schalter (1) und beide in Parallelschaltung mit dem Kondensator (4);
   wobei die Schalter-Öffnungssteuerung (6) den dritten Schalter (31) in dem Moment der Kontakttrennung des Ausschaltkontakts des ersten Schalters (1) öffnet, um die Umschaltung von dem ersten Schalter zu dem Kondensator zu unterstützen.

6. Leistungsschutzschalter nach einem der vorstehenden Ansprüche, ferner umfassend:-

   Einen Transformator mit Primärwicklung, der in Reihenschaltung mit dem Kondensator verbunden ist;
   die Sekundärwicklung, die mit einem Hilfsimpulsgenerator verbunden und konfiguriert ist, einen Impuls im Moment der Kontakttrennung des ersten Schalters zu erzeugen, um eine Umschaltung von dem ersten Schalter zu dem Kondensator zu unterstützen.

7. Leistungsschutzschalter nach einem der vorstehenden Ansprüche, ferner umfassend eine Steuereinheit, die konfiguriert ist, den Betrieb der Öffnung des Leistungsschutzschalters zu regeln.

8. Leistungsschutzschalter nach einem der vorstehenden Ansprüche, ferner umfassend einen Induktor in Reihenschaltung mit dem ersten und zweiten Schalter.

9. Ein System, umfassend:

   Einen Strompfad (5) eines Hochspannungs-Gleichstrom-Übertragungssystems; und
   einen Leistungsschutzschalter (10, 20, 30, 40, 50) nach einem der vorstehenden Ansprüche in dem Strompfad.

**Revendications**

1. Disjoncteur (10, 20, 30, 40, 50) conçu pour interrompre un courant continu dans un trajet de courant (5) d'un système de transmission à courant continu haute tension, le disjoncteur comprenant :

   un premier commutateur (1) présentant un contact de sectionnement ;
   un deuxième commutateur (2) ;
   dans lequel les premier et deuxième commutateurs (1,2) sont connectés fonctionnellement en série dans le trajet de courant ;
   un condensateur (4) connecté fonctionnellement en parallèle avec le premier commutateur (1) ; dans lequel :

   le condensateur (4) est sélectionné de sorte que, lorsque le premier commutateur (1) commence à s'ouvrir, le courant dans le trajet de courant (5) est soumis à un réseau inducteur-condensateur série pour provoquer une variation du courant d'une forme d'onde de courant continu à une forme d'onde de courant alternatif une commande d'ouverture du commutateur (6) :

   fonctionnant pour commencer à ouvrir le premier commutateur (1) alors que le deuxième commutateur (2) est fermé, ce qui provoque la circulation du courant circulant dans le trajet de courant (5) pour charger le condensateur (4) et être soumis au réseau inducteur-condensateur série, la charge du condensateur provoque une réduction ultérieurement du courant ; et
   fonctionnant pour ouvrir le deuxième commutateur (2) avec un retard après le démarrage pour ouvrir le premier commutateur (1), ce qui permet d'interrompre le courant à faible courant ou à courant nul dans la forme d'onde de courant alternatif ;

**caractérisé en ce que** le contact de sectionnement du premier commutateur (1) présente une vitesse de contact suffisante de manière à ce que la tension aux bornes du condensateur (4) soit inférieure à une tension de maintien du premier commutateur (1) à sensiblement tout moment, et dans lequel le disjoncteur comprend en outre ;
au moins un autre premier commutateur (1') en série avec le premier commutateur (1) et tous deux en parallèle avec le condensateur (4) ;
dans lequel la commande d'ouverture du commutateur (6) fonctionne pour commencer à ouvrir chaque premier commutateur (1, 1') alors que le deuxième commutateur (2) est fermé.

2. Disjoncteur selon la revendication 1, dans lequel la commande d'ouverture de commutateur fait fonctionner le deuxième commutateur (2) pour interrompre le courant à ou près d'un premier passage par zéro de la forme d'onde de courant alternatif.

3. Disjoncteur selon la revendication 1 ou 2, dans lequel le premier commutateur (1) comprend un sectionneur présentant une vitesse de contact non nulle à l'instant de séparation des contacts.

4. Disjoncteur selon une quelconque revendication précédente, comprenant en outre une varistance (21) connectée fonctionnellement en parallèle avec le condensateur (4) pour limiter la tension aux bornes du condensateur (4).

5. Disjoncteur selon une quelconque revendication précédente, comprenant en outre :

   un troisième commutateur (31) en série avec le premier commutateur (1) et tous deux en parallèle avec le condensateur (4) ;
   dans lequel la commande d'ouverture de commutateur (6) fonctionne pour ouvrir le troisième commutateur (31) autour de l'instant de séparation de contact du contact de déconnexion du premier commutateur (1) pour faciliter la commutation du premier commutateur au condensateur.

6. Disjoncteur selon une quelconque revendication précédente, comprenant en outre :

   un transformateur avec enroulement primaire connecté en série avec le condensateur;
   l'enroulement secondaire connecté à un générateur d'impulsions auxiliaire conçu pour générer une impulsion autour de l'instant de séparation de contact du premier commutateur pour faciliter la commutation du premier commutateur au condensateur.

7. Disjoncteur selon une quelconque revendication précédente, comprenant en outre un dispositif de commande conçu pour commander le fonctionnement de l'ouverture du disjoncteur.

8. Disjoncteur selon une quelconque revendication précédente, comprenant en outre un inducteur en série avec les premier et second commutateurs.

9. Système comprenant :

   un trajet de courant (5) d'un système de transmission à courant continu haute tension ; et
   un disjoncteur (10, 20, 30, 40, 50) selon une quelconque revendication précédente situé dans le trajet de courant.

FIG. 1

FIG. 2

S0    START

S1    Start to open first switch 1

S2    Open second switch 2

S3    reset

FIG. 3

FIG. 4

FIG. 5

FIG. 6

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011057675 A1
- US 20150002977 A1
- EP 2469552 A
- EP 2494571 B1
- EP 2495745 A1
- US 20180005783 A1
- US 9875861 B2
- WO 2013093066 A

- US 20160300671 A
- WO 2017037959 A1
- WO 201510385 A
- EP 2494571 B
- EP 2495745 A
- US 20180005783 A
- WO 2011057675 A

**Non-patent literature cited in the description**

- **C. M. FRANCK**. HVDC circuit breakers: A review identifying future research needs. *IEEE Transactions on Power Delivery*, 2011, vol. 26 (2), 998-1007

- **K. TAHATA et al.** HVDC circuit breakers for HVDC grid applications. *Proc. IET ACDC 2015 conference*, February 2015, 1-9